# EUROPEAN PATENT SPECIFICATION

(11) **EP 4 406 691 B1**
(45) Date of publication and mention of the grant of the patent: **31.12.2025**
(21) Application number: 23761409.4
(22) Date of filing: 13.03.2023
(51) Int. Cl.: B23K 26/70, B23K 26/38, B23K 26/142, B08B 1/12, B08B 5/04, B23K 26/16, H01M 4/04

(54) **ELECTRODE PLATE SUPPORTING DEVICE, LASER CUTTING APPARATUS, AND LASER CUTTING METHOD FOR ELECTRODE PLATE**
ELEKTRODENPLATTENHALTEVORRICHTUNG, LASERSCHNEIDVORRICHTUNG UND LASERSCHNEIDVERFAHREN FÜR EINE ELEKTRODENPLATTE
DISPOSITIF DE SUPPORT DE PLAQUE D'ÉLECTRODE, APPAREIL DE DÉCOUPE AU LASER ET PROCÉDÉ DE DÉCOUPE AU LASER POUR PLAQUE D'ÉLECTRODE

(30) Priority: 08.12.2022 CN 202223286531 U
(43) Date of publication of application: 31.07.2024
(73) Proprietor: Contemporary Amperex Technology (Hong Kong) Limited, Central, Central And Western District (HK)
(72) Inventor: ZHAO, Kaiwei, Ningde Fujian 352100 (CN); ZHENG, Yuantian, Ningde Fujian 352100 (CN); WANG, Yong, Ningde Fujian 352100 (CN); SHANG, Hongwu, Ningde Fujian 352100 (CN); LI, Shisong, Ningde Fujian 352100 (CN)
(74) Representative: Gong, Jinping
(86) International application number: PCT/CN2023/081020
(87) International publication number: WO 2024/119649

(56) References cited:
- WO-A1-2021/196188
- CN-A- 107 999 972
- CN-A- 110 560 935
- CN-U- 208 437 840
- CN-U- 209 190 036
- CN-U- 209 272 743
- CN-U- 210 548 927
- CN-U- 217 667 166
- CN-U- 217 775 909
- JP-A- 2011 206 778
- KR-A- 20170 127 962
- KR-A- 20210 001 077

## Description

The present invention relates to the technical field of laser cutting of electrode plates, and more particularly to an electrode plate supporting device, a laser cutting apparatus and a laser cutting method for an electrode plate, see claims 1, 14 and 15 respectively.

### BACKGROUND

New energy industries have been developing explosively in recent years. Tabs on electrode plates in batteries are typically fabricated by laser cutting. During laser cutting, the quality of cutting will be affected by the rationality of parameter setting in a laser apparatus, the stability of an incoming material and the mechanism stability. KR 2017 0127962 A (describing the preamble of claims 1 and 15) discloses a slitting apparatus for slitting a multilayer film comprising a metal film or a metal film. CN 210 548 927 U discloses a laser cutting device for cutting a workpiece.

However, during actual fabrication of a tab, there may exist problems of failing to cut, tab tearing, formation of burr or the like, leading to poor cutting quality of the tab.

### SUMMARY

Objectives of embodiments of the present invention are to provide an electrode plate supporting device, a laser cutting apparatus and a laser cutting method for an electrode plate, including but not limited to solving the problem of poor cutting quality of a tab.

The embodiments of the present invention adopt the following technical solutions:

According to a first aspect of the present invention, an electrode plate supporting device for use in coordination with a laser assembly is defined in claim 1, including a body constructed with an abutting surface for abutting against an electrode plate to tension the electrode plate. The laser assembly is configured to emit laser to the abutting surface.

According to the electrode plate supporting device of the embodiment of the present invention, the electrode plate may abut against the abutting surface of the body and closely fit the abutting surface to extend fully, and therefore, the problem of defocusing caused by poor extension is solved. Moreover, supported by the abutting surface, the electrode plate is not prone to shaking, and therefore, the problem of easy shaking of the electrode plate is effectively solved. The problems such as failing to cut off the incoming material are solved. The cutting quality of a tab can be improved and the use safety of a battery can be improved.

According to the first aspect of the present invention, the body includes a light absorbing component for absorbing laser and a light transmitting component for allowing the laser to transmit therethrough, and the light transmitting component covers and is connected to the light absorbing component, wherein a surface, far away from the light absorbing component, of the light transmitting component is constructed with an abutting surface.

According to the electrode plate supporting device of the embodiment of the present invention, in specific cutting, parameters of the laser cutting apparatus may be adjusted such that most laser emitted by the laser assembly is used for cutting the electrode plate and little laser passing through the electrode plate transmits through the light transmitting component to be absorbed by the light absorbing component, thus reducing damage to other components by the laser. In addition, the laser passing through the electrode plate will be dispersed in the light transmitting component after passing through the focal point, and the power density of the laser can be reduced, thus facilitating the absorption by the light absorbing component.

In an embodiment, the light absorbing component is cylindrical, and the light transmitting component covers an outer peripheral wall of the light absorbing component.

According to the electrode plate supporting device of the embodiment of the present invention, the light absorbing component is regular and simple in structure and can be fabricated conveniently.

In an embodiment, a hole is formed within the light absorbing component and extends through the light absorbing component along an axis of the light absorbing component.

According to the electrode plate supporting device of the embodiment of the present invention, the laser enters the hole after passing through the light transmitting component and the light absorbing component, and is refracted and absorbed to and fro by the wall of the hole so that the laser after cutting the electrode plate can be fully absorbed.

In an embodiment, the electrode plate supporting device includes an air extraction unit having an air extraction opening communicated with one end of the hole; or, the electrode plate supporting device includes an air blowing unit having an air blowing opening communicated with one end of the hole.

According to the electrode plate supporting device of the embodiment of the present invention, the airflow is capable of moving through the light absorbing component via the hole and taking away heat accumulated on the light absorbing component, thus reducing the temperature of the light absorbing component and avoiding excessively high temperature of the light absorbing component. Furthermore, the risk of damaging the light transmitting component and the electrode plate due to the excessively high temperature of the light absorbing component can be reduced.

In an embodiment, the electrode plate supporting device includes an air blowing unit and an air extraction unit, wherein one of two opposite ends of the hole is communicated with an air extraction opening of the air extraction unit, and the other one is communicated with an air blowing opening of the air blowing unit.

According to the electrode plate supporting device of the embodiment of the present invention, one end of the hole is used for air extraction, while the other end thereof is used for air blowing, so that the airflow is capable of moving through the light absorbing component via the hole more quickly and taking away heat accumulated on the light absorbing component more quickly, thus reducing the temperature of the light absorbing component more quickly and avoiding excessively high temperature of the light absorbing component. Furthermore, the risk of damaging the light transmitting component and the electrode plate due to the excessively high temperature of the light absorbing component can be reduced.

In an embodiment, the electrode plate supporting device further includes a supporting component disposed to pass through the hole. The supporting component and the wall of the hole form a flowing space for air to flow, and the flowing space extends through the supporting component along the axis of the light absorbing component.

According to the electrode plate supporting device of the embodiment of the present invention, the air flowing in the flowing space is capable of flowing into the hole from one end and then out of the hole from the other end, thus taking away heat accumulated on the light absorbing component, reducing the temperature of the light absorbing component and avoiding excessively high temperature of the light absorbing component. Furthermore, the risk of damaging the light transmitting component and the electrode plate due to the excessively high temperature of the light absorbing component can be reduced.

In an embodiment, a plurality of flowing spaces are formed, which are arranged at intervals in a circumferential direction of the hole.

According to the electrode plate supporting device of the embodiment of the present invention, with the plurality of flowing spaces, the contact area of the airflow with the hole wall is large and the effect of cooling the light absorbing component is good.

In an embodiment, the supporting component includes a supporting shaft and a plurality of supporting plates. The supporting shaft and the plurality of supporting plates are disposed to pass through the hole. The plurality of supporting plates are connected to the supporting shaft and arranged at intervals in a circumferential direction of the supporting shaft. Side portions, far away from the supporting shaft, of the supporting plates are connected to the wall of the hole. Surfaces, opposite to each other, of two adjacent supporting plates, an outer peripheral wall of the supporting shaft and the wall of the hole together define the flowing space.

According to the electrode plate supporting device of the embodiment of the present invention, the supporting shaft and the supporting plates can play a role in supporting and fixing the light absorbing component and can form the flowing spaces within the electrode plate supporting device to facilitate cooling of the light absorbing component. In addition, the structure is simple and convenient for fabrication.

In an embodiment, the light transmitting component is hollow cylindrical and sleeves the light absorbing component. An outer peripheral wall of the light transmitting component is constructed with an abutting surface.

According to the electrode plate supporting device of the embodiment of the present invention, the light transmitting component sleeves the light absorbing component and may play a role in protecting the light absorbing component. In addition, the light transmitting component and the light absorbing component are simple in structure and can be fabricated conveniently.

In an embodiment, the electrode plate supporting device further includes a dust suction unit for suctioning dust generated by electrode plate cutting.

According to the electrode plate supporting device of the embodiment of the present invention, the dust suction unit is capable of suctioning the dust generated by electrode plate cutting, avoiding the dust from polluting the electrode plate, reducing cutting fur and improving the cutting quality.

In an embodiment, the dust suction unit includes a dust suction component constructed with a negative pressure dust suction chamber and a first opening. The negative pressure dust suction chamber is communicated with the first opening. The outer peripheral wall of the light transmitting component is disposed opposite to the first opening.

According to the electrode plate supporting device of the embodiment of the present invention, since the outer peripheral wall of the light transmitting component is disposed opposite to the first opening, the dust on and around the outer peripheral wall of the light transmitting component will enter the negative pressure dust suction chamber through the first opening when there exists a negative pressure in the negative pressure dust suction chamber. Thus, the dust on and around the outer peripheral wall of the light transmitting component can be removed and avoided from polluting the electrode plate.

In an embodiment, the first opening has a length greater than or equal to a length of the light transmitting component in an axial direction of the light transmitting component.

According to the electrode plate supporting device of the embodiment of the present invention, the first opening is capable of suctioning the dust on the entire outer peripheral wall of the light transmitting component into the negative pressure dust suction chamber, further reducing the risk of the dust polluting the electrode plate.

In an embodiment, the electrode plate supporting device further includes a brush for sweeping dust off the outer peripheral wall of the light transmitting component.

According to the electrode plate supporting device of the embodiment of the present invention, when the light transmitting component rotates, the bristles of the brush are capable of sweeping the dust off the outer peripheral wall of the light transmitting component, thus reducing the risk of the dust polluting the electrode plate and improving the cutting quality of a tab.

In an embodiment, the brush is disposed within the negative pressure dust suction chamber; or, the dust suction component is constructed with a second opening communicated with the negative pressure dust suction chamber. The first opening and the second opening are arranged in a circumferential direction of the light transmitting component. The brush is disposed within the second opening.

According to the electrode plate supporting device of the embodiment of the present invention, the bristles of the brush sweep off the dust adhering to the outer peripheral wall of the light transmitting component. The dust swept off enters the negative pressure dust suction chamber under the action of the negative pressure of the negative pressure dust suction chamber and then is removed. Thus, the risk of the dust adhering to the outer peripheral wall of the light transmitting component again and polluting the electrode plate can be reduced, and the cutting quality of a tab can be improved.

In an embodiment, the light absorbing component is a black plastic component.

According to the electrode plate supporting device of the embodiment of the present invention, the light absorbing component is made of black plastics. With the light absorption property of the black plastics, the absorption of laser can be achieved. In addition, the low price of the black plastics is beneficial to reduce the fabricating cost.

In an embodiment, a light transmittance of the light transmitting component is greater than 95%.

According to the electrode plate supporting device of the embodiment of the present invention, the above-mentioned range is set for the light transmittance of the light transmitting component so that most laser passing through the electrode plate can be absorbed by the light absorbing component. If the light transmittance of the light transmitting component is set to be excessively low, most laser passing through the electrode plate may be absorbed by the light transmitting component, causing a high temperature of the light transmitting component and thus increasing the risk of damaging the electrode plate.

In an embodiment, the light transmitting component is a light transmitting glass component or a light transmitting plastic component.

The electrode plate supporting device of the embodiment of the present disclosure is beneficial to reduce the use cost of the electrode plate supporting device.

According to a second aspect of the present invention, a laser cutting apparatus including the electrode plate supporting device described above is defined in claim 14.

The laser cutting apparatus of the embodiment of the present invention, uses the electrode plate supporting device described above and exhibits high laser cutting quality, which is beneficial to reduce the reject ratio of electrode plate cutting, increase the yield of the electrode plate, reduce the fabrication cost and improve the use reliability of a battery.

In an embodiment, the laser cutting apparatus further includes conveying rollers disposed on two sides of the electrode plate supporting device, and a laser assembly disposed beside the electrode plate supporting device and configured to emit laser to the abutting surface.

According to the laser cutting apparatus of the embodiment of the present invention, the electrode plate abuts against the abutting surface, and the electrode plate closely fits the abutting surface and is in a tensioned state such that the wavy edge of the electrode edge is extended fully, and therefore, the problem of defocusing caused by the wavy edge is solved. Moreover, supported by the abutting surface, the electrode plate is tensioned and not prone to shaking, and therefore, problems such as failing to cut off the incoming material due to easy shaking of the electrode plate are effectively solved. The cutting quality of a tab can be improved and the use safety of a battery can be improved.

According to a third aspect of the present invention, a laser cutting method for an electrode plate, wherein the laser cutting apparatus described above is used, is defined in claim 15, including the following steps:

placing an electrode plate against the abutting surface of the electrode plate supporting device, and allowing the laser assembly of the laser cutting apparatus to emit laser toward the abutting surface to cut the electrode plate.

According to the laser cutting method for an electrode plate of the embodiment of the present invention, the electrode plate abuts against the abutting surface of the electrode plate supporting device, and the laser assembly emits laser toward the abutting surface. The laser emitted irradiates on the electrode plate to achieve the laser cutting of the electrode plate. In this process, the electrode plate abuts against the abutting surface and closely fits the abutting surface to extend fully, and therefore, the problem of defocusing caused by the wavy edge is solved. Moreover, supported by the abutting surface, the electrode plate is not prone to shaking, and therefore, the problem of easy shaking of the electrode plate is effectively solved. The problems such as failing to cut off the incoming material are solved. The cutting quality of a tab can be improved and the use safety of a battery can be improved.

### BRIEF DESCRIPTION OF THE DRAWINGS

To describe the technical solutions in the embodiments of the present invention more clearly, the accompanying drawings to be used in the embodiments or exemplary technical description will be briefly described below. Apparently, the accompanying drawings in the following description show merely some embodiments of the present disclosure, and other drawings may be derived from these drawings by a person of ordinary skill in the art without creative efforts.
FIG. 1 is a structural schematic diagram illustrating, at one viewing angle, an electrode plate abutting against an electrode plate supporting device according to an embodiment of the present disclosure.
FIG. 2 is a structural schematic diagram illustrating, at another viewing angle, the electrode plate abutting against the electrode plate supporting device shown in FIG. 1.
FIG. 3 is a schematic structural diagram illustrating a laser assembly and an electrode plate abutting against an electrode plate supporting device according to an embodiment of the present disclosure.
FIG. 4 is a sectional view taken along line A-A in FIG. 3.
FIG. 5 is an exploded schematic diagram illustrating an electrode plate abutting against an electrode plate supporting device shown in FIG. 1.

The reference numerals used throughout the drawings each denote:

| | | | | | |
|---|---|---|---|---|---|
| 100- | electrode plate supporting device | 110- | body | 111- | light absorbing component |
| 112- | light transmitting component | 120- | air extraction unit | 130- | supporting component |
| 131- | supporting shaft | 132- | supporting plate | 140- | dust suction unit |
| 141- | dust suction component | 150- | brush | 200- | laser assembly |
| 210- | laser | 300- | electrode plate | 1111- | hole |
| 1112- | flowing space | 1121- | abutting surface | 1401- | negative pressure dust suction chamber |
| 1402- | first opening | 1403- | second opening | 1411- | main body portion |
| 1412- | connecting pipe portion. | | | | |

### DETAILED DESCRIPTION OF THE EMBODIMENTS

Embodiments of the present invention are described in detail below, and examples of the embodiments are shown in the accompanying drawings. Same or similar reference numerals throughout the accompanying drawings indicate same or similar components or components having the same or similar functions. The embodiments described below with reference to the accompanying drawings are exemplary, are intended to explain the present invention and should not be construed as limitations to the present invention.

In the description of the present disclosure, it needs to be understood the orientations or positional relationships indicated by the terms "length", "width", "up", "down", "front", "rear", "left", "right", "vertical", "horizontal", "top", "bottom", "inside", "outside" and the like are based on those shown in the accompanying drawings, and these terms are merely intended to facilitate the description of the present disclosure or simplify the description, rather than to indicate or imply that the mentioned device or component must have a specific orientation or be constructed and operated in the specific orientation, and thus cannot be construed as limitations to the present disclosure.

Moreover, the terms "first" and "second" are merely used for the purpose of description and should not be construed as indicating or implying relative importance, or implicitly indicating the number of technical features indicated. Thus, features defined with "first" and "second" may explicitly or implicitly include one or more of the features. In the description of the present disclosure, "a plurality of" means two or more, unless otherwise specifically defined.

In the present disclosure, unless otherwise clearly specified and defined, the terms "mounted", "connected with", "connected to", and "fixed" should be understood in a board sense. For example, the connection may be a fixed connection, a detachable connection or an integrated connection; may be a mechanical connection or an electrical connection; may be a direct connection or an indirect connection by means of an intermediate medium, or may be internal communication between two components or an interactive relationship between two components. A person of ordinary skill in the art may understand specific meanings of the foregoing terms in the present disclosure based on a specific situation.

It should also be noted that a same reference numeral represents a same constituent part or a same component or part in the embodiments of the present disclosure. For same components or parts in the embodiments of the present disclosure, only one of the components or parts may be taken as an example to mark the reference numeral in the drawings, and it should be understood that the reference numeral is also applicable to other same components or parts.

In the present disclosure, the terms "one embodiment", "some embodiments", "example", "specific example", "some examples" or the like mean that a specific feature, structure, material, or characteristic described in combination with the embodiment(s) or example(s) is included in at least one embodiment or example of the present disclosure. Herein, the schematic representation of the above terms is not necessarily directed to the same embodiment or example. Furthermore, the specific features, structures, materials, or characteristics described may be combined in a suitable manner in any one or more of embodiments or examples. In addition, a person skilled in the art may combine different embodiments or examples described herein and features of different embodiments or examples without any contradiction.

At present, from the perspective of the development of the market situation, the use of power batteries is increasingly extensive. Power batteries are not only used in energy storage power systems such as hydraulic power, thermal power, wind power and solar power stations, but also widely used in electrical vehicles such as electric bicycles, electric motorcycles and electromobiles, as well as used in many fields such as military equipment and aerospace. With the application fields of power batteries continuously extending, market demands for them also increase continuously.

Tabs on electrode plates in batteries are typically fabricated by laser cutting. During laser cutting, the quality of cutting will be affected by the rationality of parameter setting in a laser apparatus, the stability of an incoming material and the mechanism stability. However, during actual fabrication of a tab, there may exist problems of failing to cut, tab tearing, formation of burr or the like, leading to poor cutting quality of the tab.

During laser cutting, an electrode plate is wound around two conveying rollers within a laser cutting apparatus; a laser assembly within the laser cutting apparatus emits laser, and the focal point exactly falls on the electrode plate located between the two conveying rollers to realize laser cutting; and the conveying rollers rotate to drive the electrode plate to be conveyed forward, thereby achieving the cutting of a tab. However, the electrode plate needs to be cold-pressed before the laser cutting, and a wavy edge may be easily formed on the cold-pressed electrode plate, leading to poor extension of the tab portion of the electrode plate. Especially the tab of a negative electrode plate is coated with an insulation paste so that the wavy edge is more prone to formation after the cold pressing. In addition, in the process of conveying the electrode plate by the conveying rollers, the electrode plate located between the two conveying rollers is in a suspended state and prone to shaking. The poor extension of the tab portion and the shaking of the electrode plate will cause the electrode plate to separate from the focal point of laser cutting, leading to problems of failing to cut off an incoming material, tab tearing, formation of burr or the like, resulting in problems such as poor cutting quality of the tab, high rejection ratio of the electrode plate and rising complaint rate due to burr induced low voltage and even affecting the use safety of a battery.

To alleviate the above-mentioned problem of poor cutting of the tab, the electrode plate may abut against the abutting surface of the body and closely fit the abutting surface to extend fully, and therefore, the problem of defocusing caused by poor extension is solved. Moreover, supported by the abutting surface, the electrode plate is not prone to shaking, and therefore, the problem of easy shaking of the electrode plate is effectively solved. The problems such as failing to cut off the incoming material are solved. The cutting quality of the tab can be improved and the use safety of a battery can be improved.

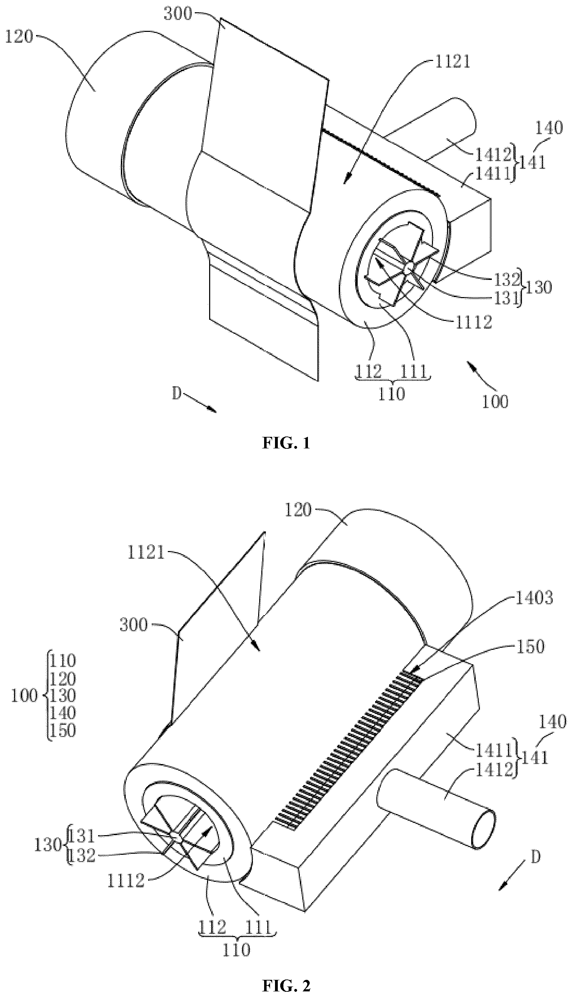

As shown in FIG. 1 to FIG. 3, one embodiment of the present disclosure provides an electrode plate supporting device 100. The electrode plate supporting device 100 is used in coordination with a laser assembly 200 and includes a body 110 constructed with an abutting surface 1121 for abutting against an electrode plate 300 to tension the electrode plate 300. The laser assembly 200 is configured to emit laser to the abutting surface 1121.

The body 110 is a component capable of abutting against the electrode plate 300. Specifically, the body 110 may be of a cylindrical structure, a plate-like structure, a cambered structure or the like, which may be particularly selected according to actual requirements and will not be defined here.

The abutting surface 1121 refers to a surface formed on the body 110 and capable of abutting against the electrode plate 300 to tension the electrode plate 300.

The abutting surface 1121 is used for abutting against the electrode plate 300 to tension the electrode plate 300. It may be understood that the electrode plate 300 covers the abutting surface 1121 and is in a tensioned state under the abutting action of the abutting surface 1121 such that the electrode plate 300 is fully extended on the abutting surface 1121. For ease of description, a region of the electrode plate 300 that abuts against the abutting surface 1121 is defined as an abutting region.

The laser assembly 200 refers to a component capable of emitting laser.

The laser assembly 200 is configured to emit laser to the abutting surface 1121. It may be understood that when the electrode plate 300 abuts against the abutting surface 1121, the laser emitted by the laser assembly 200 is capable of falling on the abutting region of the electrode plate, and the laser is capable of cutting the region, thus achieving tab cutting.

According to the electrode plate supporting device 100 of the embodiment of the present disclosure, the electrode plate 300 may abut against the abutting surface 1121 of the body 110 and closely fit the abutting surface 1121 to extend fully, and therefore, the problem of defocusing caused by poor extension is solved. Moreover, supported by the abutting surface 1121, the electrode plate 300 is not prone to shaking, and therefore, the problem of easy shaking of the electrode plate 300 is effectively solved. The problems such as failing to cut off the incoming material are solved. The cutting quality of a tab can be improved and the use safety of a battery can be improved.

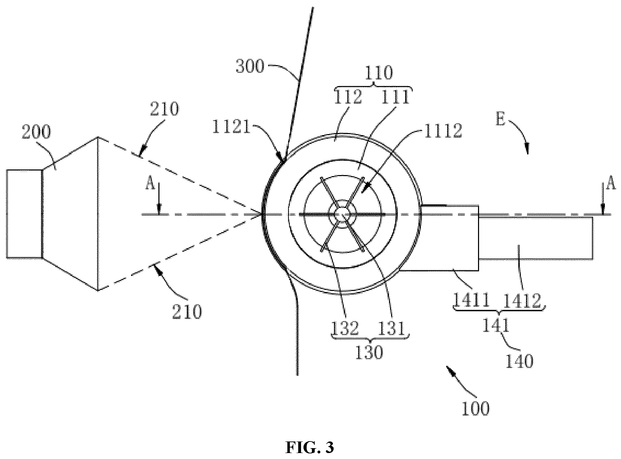

With reference to FIG. 3, the electrode plate supporting device 100 of the embodiment of the present disclosure is used in coordination with a laser cutting apparatus. The body 110 is mounted between two conveying rollers in the laser cutting apparatus. After the electrode plate 300 is wound around the two conveying rollers, the electrode plate 300 is located between the laser assembly 200 and the body 110, and the electrode plate 300 fits the abutting surface 1121 of the body 110 and is tensioned between the two conveying rollers. Subsequently, the laser cutting apparatus is adjusted such that the focal point of the laser 210 emitted by the laser assembly 200 just falls on the abutting region of the electrode plate 300, thereby completing the cutting of the tab. In this process, the electrode plate 300 abuts against the abutting surface 1121, and the electrode plate 300 closely fits the abutting surface 1121 and is in the tensioned state such that the wavy edge of the electrode plate 300 is extended fully, and therefore, the problem of defocusing caused by the wavy edge is solved. Moreover, supported by the abutting surface 1121, the electrode plate 300 is tensioned and not prone to shaking, and therefore, problems such as failing to cut off the incoming material due to easy shaking of the electrode plate 300 are effectively solved. The cutting quality of the tab can be improved and the use safety of a battery can be improved.

According to the present invention, as shown in FIG. 1 to FIG. 3, the body 110 of the provided electrode plate supporting device 100 includes a light absorbing component 111 capable of absorbing the laser 210 passing through the electrode plate 300; and the body 110 includes a light transmitting component 112 capable of allowing the laser 210 passing through the electrode plate 300 to transmit therethrough.

The light absorbing component 111 refers to a component capable of absorbing the laser 210. Specifically, the light absorbing component 111 is capable of absorbing the laser 210 passing through the electrode plate 300. After the laser 210 passing through the electrode plate 300 is absorbed by the light absorbing component 111, the risk of causing damage to other components is reduced. The light absorbing component 111 is usually made of black plastics, and the laser 210 may be absorbed by the black plastics, avoiding damage to other components by the laser 210.

The light transmitting component 112 refers to a component capable of allowing the laser 210 to transmit therethrough. Specifically, the light transmitting component 112 capable of allowing the laser passing through the electrode plate 300 to transmit therethrough, and the laser 210 passing through the electrode plate 300 is dispersed after transmitting through the light transmitting component 112, thereby greatly reducing the energy of the laser 210 and reducing the risk of causing damage to other components. The light transmitting component 112 is made of a transparent material, wherein the transparent material may be an optical glass, transparent plastics or the like.

The electrode plate supporting device 100 thus reduces the risk of causing damage to other components by the laser 210 passing through the electrode plate 300.

As shown in FIG. 1 to FIG. 3, the body 110 of the provided electrode plate supporting device 100 includes a light absorbing component 111 and a light transmitting component 112. The light transmitting component 112 is used for the laser 210 to transmit therethrough, and covers and is connected to the light absorbing component 111.

The light absorbing component 111 refers to a component capable of absorbing the laser 210. Specifically, the light absorbing component 111 is usually made of black plastics, and the laser 210 may be absorbed by the black plastics, avoiding damage to other components by the laser 210.

The light transmitting component 112 refers to a component capable of allowing the laser 210 to transmit therethrough. Specifically, the light transmitting component 112 is made of a transparent material, wherein the transparent material may be an optical glass, transparent plastics or the like.

The abutting surface 1121 refers to a portion formed on a surface, far away from the light absorbing component 111, of the light transmitting component 112 and in contact with the electrode plate 300, wherein when the body 110 does not rotate, the abutting surface 1121 is a region formed on the surface, far away from the light absorbing component 111, of the light transmitting component 112 and abutting against the electrode plate 300; and when the light transmitting component 112 rotates, the abutting surface 1121 is the entire region formed on the surface, far away from the light absorbing component 111, of the light transmitting component 112 and capable of abutting against the electrode plate 300.

The electrode plate supporting device 100 is used in coordination with a laser cutting apparatus. The electrode plate supporting device 100 is mounted between two conveying rollers in the laser cutting apparatus. After the electrode plate 300 is wound around the two conveying rollers, the electrode plate 300 fits the abutting surface 1121 of the light transmitting component 112 and is tensioned between the two conveying rollers. Subsequently, the laser cutting apparatus emits laser 210 and the focal point of the laser 210 exactly falls on the electrode plate 300 on the abutting surface 1121 for cutting. The laser 210 after the completion of cutting transmits through the light transmitting component 112 and is absorbed by the light absorbing component 111. Thus, the cutting of the tab portion of the electrode plate by the laser 210 is completed. In this process, the electrode plate 300 abuts against the abutting surface 1121 of the light transmitting component 112 to be tensioned and closely fits the abutting surface 1121 to extend fully, and therefore, defocusing caused by poor extension is avoided. Moreover, supported by the abutting surface 1121, the electrode plate 300 is tensioned and not prone to shaking, and therefore, the problem of easy shaking of the electrode plate 300 is effectively solved. The problems such as failing to cut off the incoming material are solved. The cutting quality of the tab can be improved and the use safety of a battery can be improved.

According to the electrode plate supporting device 100 of the embodiment of the present disclosure, in specific cutting, parameters of the laser cutting apparatus may be adjusted such that most laser 210 emitted by the laser assembly 200 is used for cutting the electrode plate 300 and little laser 210 passing through the electrode plate 300 transmits through the light transmitting component 112 to be absorbed by the light absorbing component 111, thus reducing damage to other components by the laser 210. In addition, the laser 210 passing through the electrode plate 300 will be dispersed in the light transmitting component 112 after passing through the focal point, and the power density of the laser 210 can be reduced, thus facilitating the absorption by the light absorbing component 111.

In another embodiment of the present disclosure, with reference to FIG. 1 to FIG. 3, the light absorbing component 111 of the provided electrode plate supporting device 100 is cylindrical, and the light transmitting component 112 covers an outer peripheral wall of the light absorbing component 111.

The light absorbing component 111 is cylindrical. It may be understood that the light absorbing component 111 is in a cylinder shape. Specifically, the light absorbing component 111 may be cylinder-shaped, prism-shaped, or in other shapes.

According to the electrode plate supporting device 100 of the embodiment of the present disclosure, the light absorbing component 111 is regular and simple in structure and can be fabricated conveniently.

In another embodiment of the present disclosure, with reference to FIG. 3 to FIG. 5, a hole 1111 is formed within the light absorbing component 111 of the provided electrode plate supporting device 100 and extends through the light absorbing component 111 along an axis (B-B) of the light absorbing component 111.

The hole 1111 is a hole structure extending through the light absorbing component 111 along the axis (B-B) of the light absorbing component 111. Specifically, the hole 1111 may be a circular hole, a triangular hole, a stepped hole or the like.

According to the electrode plate supporting device 100 of the embodiment of the present disclosure, the laser 210 enters the hole 1111 after passing through the light transmitting component 112 and the light absorbing component 111, and is refracted and absorbed to and fro by the wall of the hole 1111 so that the laser 210 after cutting the electrode plate 300 can be fully absorbed.

In another embodiment of the present disclosure, with reference to FIG. 3 to FIG. 5, the provided electrode plate supporting device 100 further includes an air extraction unit 120 having an air extraction opening communicated with one end of the hole 1111; or the electrode plate supporting device 100 further includes an air blowing unit having an air blowing opening communicated with one end of the hole 1111.

The air extraction unit 120 refers to a unit capable of extracting air. Specifically, a suction fan is disposed within the air extraction unit 120, and the suction fan rotates to create a negative pressure at the air extraction opening. Under the action of the negative pressure, external air will enter the air extraction unit 120 via the air extraction opening, thus realizing air extraction by the air extraction unit 120. As a matter of course, in other embodiments, the air extraction unit 120 may also be other unit capable of extracting air, which will not be defined here.

The air extraction opening of the air extraction unit 120 is communicated with one end of the hole 1111. It may be understood that the air extraction unit 120 is capable of extracting air through the hole 1111 so that the external air can enter the hole 1111 from the other end of the hole 1111 and flow through the hole 1111 to come out of the air extraction opening of the air extraction unit 120. Moreover, when the external air flows through the hole 1111, heat accumulated on the light absorbing component 111 is taken away, thereby reducing the temperature of the light absorbing component 111 and reducing damage to the light transmitting component 112 and the electrode plate 300 due to excessively high temperature of the light absorbing component 111.

The air blowing unit refers to a unit capable of blowing out airflow. Specifically, a fan is disposed within the air blowing unit. The fan rotates to blow the airflow out of the air blowing opening, thus realizing air blowing by the air blowing unit. As a matter of course, in other embodiments, the air blowing unit may also be other unit capable of blowing out airflow, which will not be defined here.

The air blowing opening of the air blowing unit is communicated with one end of the hole 1111. It may be understood that the airflow blown out by the air blowing unit can enter the hole 1111 and move through the hole 1111 to come out of the other end of the hole 1111. Moreover, when the airflow moves through the hole 1111, heat accumulated on the light absorbing component 111 is taken away, thereby reducing the temperature of the light absorbing component 111 and avoiding excessively high temperature of the light absorbing component 111. Furthermore, the risk of damaging the light transmitting component 112 and the electrode plate 300 due to the excessively high temperature of the light absorbing component 111 can be reduced.

According to the electrode plate supporting device 100 of the embodiment of the present disclosure, the airflow is capable of moving through the light absorbing component 111 via the hole 1111 and taking away heat accumulated on the light absorbing component 111, thus reducing the temperature of the light absorbing component 111 and avoiding excessively high temperature of the light absorbing component 111. Furthermore, the risk of damaging the light transmitting component 112 and the electrode plate 300 due to the excessively high temperature of the light absorbing component 111 can be reduced.

In another embodiment of the present disclosure, with reference to FIG. 3 to FIG. 5, the provided electrode plate supporting device 100 further includes an air blowing unit and an air extraction unit 120, wherein one of two opposite ends of the hole 1111 is communicated with an air extraction opening of the air extraction unit 120, and the other one is communicated with an air blowing opening of the air blowing unit. It may be understood that after the air blowing unit blows the airflow into the hole 1111 from one end of the hole 1111, the airflow moves to the other end of the hole 1111 via the hole 1111 and is finally extracted by the air extraction unit 120. Moreover, when the airflow moves through the hole 1111, heat accumulated on the light absorbing component 111 is taken away, thereby reducing the temperature of the light absorbing component 111 and avoiding excessively high temperature of the light absorbing component 111. Furthermore, the risk of damaging the light transmitting component 112 and the electrode plate 300 due to the excessively high temperature of the light absorbing component 111 can be reduced. In addition, one end of the hole 1111 is used for extracting air and the other end thereof is used for blowing air. Thus, the airflow in the hole 1111 moves at a high velocity, providing good cooling effect for the light absorbing component 111.

According to the electrode plate supporting device 100 of the embodiment of the present disclosure, the airflow is capable of moving through the light absorbing component 111 via the hole more quickly 1111 and taking away heat accumulated on the light absorbing component 111 more quickly, thus reducing the temperature of the light absorbing component 111 more quickly and avoiding excessively high temperature of the light absorbing component 111. Furthermore, the risk of damaging the light transmitting component 112 and the electrode plate 300 due to the excessively high temperature of the light absorbing component 111 can be reduced.

In another embodiment of the present disclosure, with reference to FIG. 1, FIG. 4 and FIG. 5, the provided electrode plate supporting device 100 further includes a supporting component 130 disposed to pass through the hole 1111. The supporting component 130 and the wall of the hole 1111 form a flowing space 1112 for air to flow, and the flowing space 1112 extends through the supporting component 130 along the axis (B-B) of the light absorbing component 111.

The supporting component 130, serving as a mounting base for the light absorbing component 111, plays a role in supporting and fixing the light absorbing component 111. In specific use, the electrode plate supporting device 100 may be mounted within a laser cutting apparatus by means of the supporting component 130, and the mounting operation is simple and convenient.

The flowing space 1112 is a space defined by the supporting component 130 and the wall of the hole 1111, and the flowing space 1112 extends through the supporting component 130 along the axis (B-B) of the light absorbing component 111. The flowing space 1112 is capable of extending through the supporting component 130 along the axis (B-B) of the light absorbing component 111 so that the airflow can moves into the hole 1111 from one end and then out of the hole 1111 from the other end.

According to the electrode plate supporting device 100 of the embodiment of the present disclosure, the air flowing in the flowing space 1112 is capable of flowing into the hole 1111 from one end and then out of the hole 1111 from the other end, thus taking away heat accumulated on the light absorbing component 111, reducing the temperature of the light absorbing component 111 and avoiding excessively high temperature of the light absorbing component 111. Furthermore, the risk of damaging the light transmitting component 112 and the electrode plate 300 due to the excessively high temperature of the light absorbing component 111 can be reduced.

In another embodiment of the present disclosure, the provided electrode plate supporting device 100 has a plurality of flowing spaces 1112, which are arranged at intervals in a circumferential direction of the hole 1111.

The plurality of flowing spaces 1112 are arranged at uniform intervals in the circumferential direction of the hole 1111. It may be understood that a plurality of flowing spaces 1112 are formed between the supporting component 130 and the wall of the hole 1111 and distributed at intervals in the circumferential direction of the hole 1111. Thus, there are airflows moving within the plurality of flowing spaces 1112. The contact area of the plurality of airflows with the wall of the hole 1111 is large, providing better cooling effect for the light absorbing component 111.

According to the electrode plate supporting device 100 of the embodiment of the present disclosure, with the plurality of flowing spaces 1112, the contact area of the airflow with the hole wall is large and the effect of cooling the light absorbing component 111 is good.

In another embodiment, a plurality of flowing spaces 1112 are arranged at uniform intervals in the circumferential direction of the hole 1111. Thus, the wall of the hole 1111 can be cooled evenly with good cooling effect. In addition, this structure is simple and convenient for fabrication. In a specific embodiment, the plurality of flowing spaces 1112 are distributed into a circular array with the axis (B-B) of the hole 1111 as a center. Thus, the wall of the hole 1111 can be cooled evenly along the whole circumference, providing better cooling effect for the light absorbing component 111. This structure is regular, and convenient and reliable for fabrication.

In another embodiment of the present disclosure, with reference to FIG. 1, FIG. 3 and FIG. 5, the supporting component 130 of the provided electrode plate supporting device 100 includes a supporting shaft 131 and a plurality of supporting plates 132. The supporting shaft 131 and the plurality of supporting plates 132 are disposed to pass through the hole 1111. The plurality of supporting plates 132 are connected to the supporting shaft 131 and arranged at intervals in a circumferential direction of the supporting shaft 131. Side portions, far away from the supporting shaft 131, of the supporting plates 132 are connected to the wall of the hole 1111. Surfaces, opposite to each other, of two adjacent supporting plates 132, an outer peripheral wall of the supporting shaft 131 and the wall of the hole 1111 together define the flowing space 1112.

The supporting shaft 131 refers to a shaft-like component passing through the hole 1111. In specific use, two ends of the supporting shaft 131 extend out of the hole 1111 and are connected to a laser cutting apparatus to realize the fixation of the electrode plate supporting device 100 within the laser cutting apparatus.

The supporting plate 132 refers to a plate-like component disposed in the circumferential direction of the supporting shaft 131. The supporting plate 132 is capable of isolating the wall of the hole 1111 from the outer peripheral wall of the supporting shaft 131 to form the flowing space 1112. In addition, the supporting plate 132 is also capable of playing a role in supporting and fixing the light absorbing component 111.

According to the electrode plate supporting device 100 of the embodiment of the present disclosure, the supporting shaft 131 and the supporting plates 132 can play a role in supporting and fixing the light absorbing component 111 and can form the flowing spaces 1112 within the electrode plate supporting device 100 to facilitate cooling of the light absorbing component 111. In addition, the structure is simple and convenient for fabrication.

In another embodiment, a connection between the supporting shaft 131 and the supporting plates 132 may also be, but not limited to, a bolted connection, bonding, clamping, riveting, welding, integrated molding, etc. Among them, the integrated molding refers to molding by using an integrated molding process such as extruding, injection molding and pressure casting.

In another embodiment of the present disclosure, with reference to FIG. 1, FIG. 3 and FIG. 5, the light transmitting component 112 of the provided electrode plate supporting device 100 is hollow cylindrical and sleeves the light absorbing component 111, and an abutting surface 1121 is formed on the outer peripheral wall of the light transmitting component 112.

The light transmitting component 112 is hollow cylindrical. It may be understood that the light transmitting component 112 is cylinder-shaped and hollow. Specifically, the light transmitting component 112 may be of a hollow cylindrical structure, a hollow plate-like structure, a hollow cambered structure, etc.

The light transmitting component 112 sleeves the light absorbing component 111. It may be understood that a cavity is constructed within the light transmitting component 112 and the light absorbing component 111 is located within the cavity. Accordingly, the light transmitting component 112 encases the light absorbing component 111 and thus may play a role in protecting the light absorbing component 111.

According to the electrode plate supporting device 100 of the embodiment of the present disclosure, the light transmitting component 112 sleeves the light absorbing component 111 and may play a role in protecting the light absorbing component 111. In addition, the connection structure of the light transmitting component 112 and the light absorbing component 111 are simple and also convenient for fabrication.

In another embodiment, the light transmitting component 112 is in interference fit with the light absorbing component 111 such that the light transmitting component 112 and the light absorbing component 111 are connected integrally. In addition, a connection between the light transmitting component 112 and the light absorbing component 111 may also be, but not limited to, a bolted connection, bonding, clamping, riveting, welding, etc.

In another embodiment of the present disclosure, the provided electrode plate supporting device 100 further includes a dust suction unit 140 capable of suctioning dust generated by cutting the electrode plate 300.

The dust suction unit 140 refers to a unit capable of suctioning dust generated by cutting the electrode plate 300. Specifically, a suction fan is disposed within the dust suction unit 140. The suction fan creates a negative pressure at a dust suction opening of the dust suction unit 140. Under the action of the negative pressure, dust is suctioned into the dust suction unit 140. Thus, dust suction by the dust suction unit 140 is achieved. As a matter of course, in other embodiments, the dust suction unit 140 may also be other unit capable of suctioning dust, which will not be defined here.

According to the electrode plate supporting device 100 of the embodiment of the present disclosure, the dust suction unit 140 is capable of suctioning the dust generated by cutting the electrode plate 300, avoiding the dust from polluting the electrode plate, reducing cutting fur and improving the cutting quality.

In another embodiment of the present disclosure, with reference to FIG. 2, FIG. 4 and FIG. 5, the dust suction unit 140 of the provided electrode plate supporting device 100 includes a dust suction component 141 constructed with a negative pressure dust suction chamber 1401 and a first opening 1402. The negative pressure dust suction chamber 1401 is communicated with the first opening 1402, and the outer peripheral wall of the light transmitting component 112 is disposed opposite to the first opening 1402.

The negative pressure dust suction chamber 1401 refers to a chamber formed within the dust suction component 141 and having a negative pressure therein.

The first opening 1402 refers to an opening structure formed outside the dust suction component 141.

The negative pressure dust suction chamber 1401 is communicated with the first opening 1402. It may be understood that the negative pressure dust suction chamber 1401 and the first opening 1402 are in a communicated state. Specifically, the suction fan extracts air out of the negative pressure dust suction chamber 1401, thereby creating a negative pressure within the negative pressure dust suction chamber 1401. Under the action of the negative pressure, dust is suctioned into the dust suction unit 140. Thus, dust suction by the dust suction unit 140 is achieved. When there is the negative pressure in the negative pressure dust suction chamber 1401, the dust outside the dust suction component 141 will enter the negative pressure dust suction chamber 1401 through the first opening 1402. That is, the first opening 1402 serves as the dust suction opening of the dust suction unit 140, thus achieving dust suction.

According to the electrode plate supporting device 100 of the embodiment of the present disclosure, since the outer peripheral wall of the light transmitting component 112 is disposed opposite to the first opening 1402, the dust on and around the outer peripheral wall of the light transmitting component 112 will enter the negative pressure dust suction chamber 1401 through the first opening 1402 when there exists a negative pressure in the negative pressure dust suction chamber 1401. Thus, the dust on and around the outer peripheral wall of the light transmitting component 112 can be removed and avoided from polluting the electrode plate.

In another embodiment, one side of the outer peripheral wall of the light transmitting component 112 abuts against the electrode plate 300 and the other side of the outer peripheral wall of the light transmitting component 112 is disposed opposite to the first opening 1402 so that the dust on the outer peripheral wall of the light transmitting component 112 can fall into the negative pressure dust suction chamber 1401 from the first opening 1402. When the light transmitting component 112 rotates about the axis (B-B) of the light transmitting component 112 along with the conveying roller, the outer peripheral wall of the light transmitting component 112 after dust removal will rotate to abut against the electrode plate 300 as the light transmitting component 112 rotates. Thus, the dust is prevented from contact with the electrode plate 300, and the cutting quality of a tab can be improved.

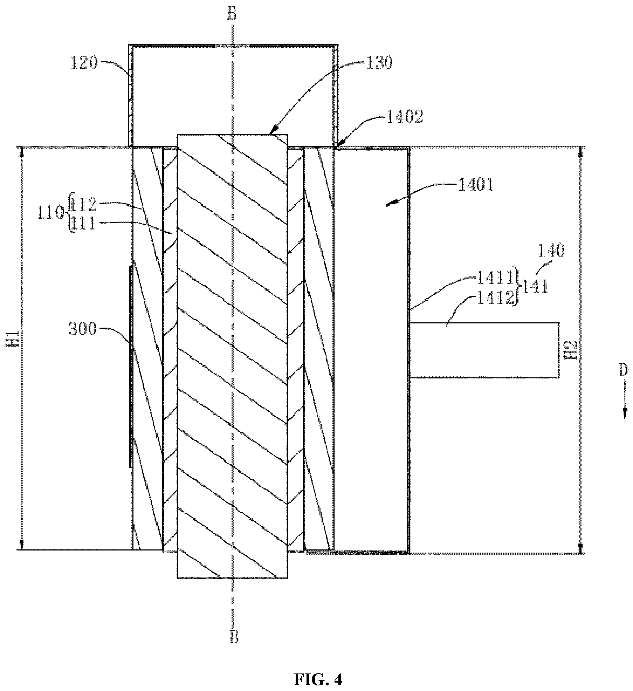

In another embodiment of the present disclosure, with reference to FIG. 4, in the provided electrode plate supporting device 100, the first opening 1402 has a length H2 greater than or equal to a length H1 of the light transmitting component 112 in an axial direction (referring to the forward direction or the negative direction of arrow D) of the light transmitting component 112.

The length H2 of the first opening 1402 is greater than or equal to the length H1 of the light transmitting component 112 in the axial direction of the light transmitting component 112. It may be understood that the length H2 of the first opening 1402 in the axial direction of the light transmitting component 112 is greater than or equal to the length H1 of the light transmitting component 112 in the axial direction of the light transmitting component 112.

According to the electrode plate supporting device 100 of the embodiment of the present disclosure, the first opening 1402 is capable of suctioning the dust on the entire outer peripheral wall of the light transmitting component 112 into the negative pressure dust suction chamber, further reducing the risk of the dust polluting the electrode plate.

In another embodiment, the arc shape of the first opening 1402 matches that of the outer peripheral wall of the light transmitting component 112.

The shape of the first opening 1402 matches that of the outer peripheral wall of the light transmitting component 112. It may be understood that the curved arc shape of the first opening 1402 is the same as or approximately the same as that of the outer peripheral wall of the light transmitting component 112. Specifically, in the axial direction of the light transmitting component 112, a projection of a portion, opposite to the first opening 1402, of the outer peripheral wall of the light transmitting component 112 is a first arc line, and a projection of the first opening 1402 is a second arc line. The shape of the first arc line is the same as or approximately the same as that of the second arc line.

According to the electrode plate supporting device 100 of the embodiment of the present disclosure, the coverage area of the first opening 1402 on the outer peripheral wall of the light transmitting component 112 is large, and good dust removal effect can be achieved.

In another embodiment of the present disclosure, with reference to FIG. 2, the provided electrode plate supporting device 100 further includes a brush 150 for sweeping dust off the outer peripheral wall of the light transmitting component 112. It may be understood that the bristles of the brush 150 abut against the outer peripheral wall of the light transmitting component 112. When the light transmitting component 112 rotates, the bristles are capable of sweeping dust off the outer peripheral wall of the light transmitting component 112, thereby reducing the risk of dust polluting the electrode plate 300 and improving the cutting quality of a tab.

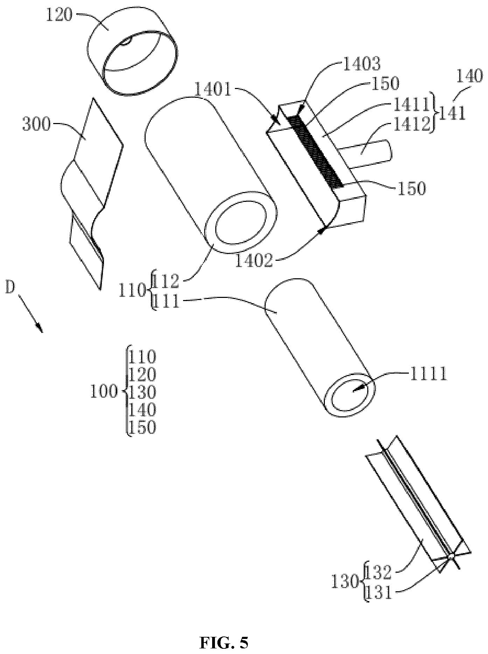

In another embodiment of the present disclosure, with reference to FIG. 2 and FIG. 5, the brush 150 of the provided electrode plate supporting device 100 is disposed within the negative pressure dust suction chamber 1401; or, the dust suction component 141 is constructed with a second opening 1403 communicated with the negative pressure dust suction chamber 1401. The first opening 1402 and the second opening 1403 are arranged in a circumferential direction (referring to the forward direction or the negative direction of arrow E in FIG. 3) of the light transmitting component 112. The brush 150 is disposed within the second opening 1403.

The brush 150 is disposed within the negative pressure dust suction chamber 1401. It may be understood that at least part of the bristles of the brush 150 extends out of the negative pressure dust suction chamber 1401 and abuts against the outer peripheral wall of the light transmitting component 112. As the light transmitting component 112 rotates, the bristles sweep off the dust adhering to the outer peripheral wall of the light transmitting component 112. The dust swept off enters the negative pressure dust suction chamber 1401 under the action of the negative pressure of the negative pressure dust suction chamber 1401 and then is removed. Thus, the risk of the dust adhering to the outer peripheral wall of the light transmitting component 112 again and polluting the electrode plate 300 can be reduced, and the cutting quality of a tab can be improved.

The dust suction component 141 is constructed with a second opening 1403 communicated with the negative pressure dust suction chamber 1401. The first opening 1402 and the second opening 1403 are arranged in the circumferential direction of the light transmitting component 112, and the brush 150 is disposed within the second opening 1403. It may be understood that the second opening 1403 provides a mounting space for the brush 150 and at least part of the bristles of the brush 150 extends out of the second opening 1403 and abuts against the outer peripheral wall of the light transmitting component 112. During the rotation of the light transmitting component 112, as the light transmitting component 112 rotates, the bristles sweep off the dust adhering to the outer peripheral wall of the light transmitting component 112. The dust swept off enters the negative pressure dust suction chamber 1401 through the first opening 1402 and the second opening 1403 under the action of the negative pressure of the negative pressure dust suction chamber 1401 and then is removed. Thus, the risk of the dust adhering to the outer peripheral wall of the light transmitting component 112 again and polluting the electrode plate 300 can be reduced, and the cutting quality of a tab can be improved.

According to the electrode plate supporting device 100 of the embodiment of the present disclosure, the bristles of the brush 150 sweep off the dust adhering to the outer peripheral wall of the light transmitting component 112. The dust swept off enters the negative pressure dust suction chamber 1401 under the action of the negative pressure of the negative pressure dust suction chamber 1401 and then is removed. Thus, the risk of the dust adhering to the outer peripheral wall of the light transmitting component 112 again and polluting the electrode plate 300 can be reduced, and the cutting quality of a tab can be improved.

In another embodiment of the present disclosure, the light absorbing component 111 of the provided electrode plate supporting device 100 is a black plastic component.

The light absorbing component 111 is a black plastic component. It may be understood that the light absorbing component 111 is made of black plastics. With the light absorption property of the black plastics, the absorption of laser 210 can be achieved. In addition, the low price of the black plastics is beneficial to reduce the fabricating cost. Specifically, the black plastics may be black rubber, black silicone, etc.

In another embodiment of the present disclosure, the light transmitting component 112 of the provided electrode plate supporting device 100 has a light transmittance of greater than 95%.

The light transmittance of the light transmitting component 112 refers to a percentage of a light flux through the light transmitting component 112 to an incident light flux.

According to the electrode plate supporting device 100 of the embodiment of the present disclosure, the above-mentioned range is set for the light transmittance of the light transmitting component 112 so that most laser 210 passing through the electrode plate 300 can be absorbed by the light absorbing component 111. If the light transmittance of the light transmitting component 112 is set to be excessively low, most laser 210 passing through the electrode plate 300 may be absorbed by the light transmitting component 112, causing a high temperature of the light transmitting component 112 and thus increasing the risk of damaging the electrode plate 300.

In another embodiment of the present disclosure, the light transmitting component 112 of the provided electrode plate supporting device 100 is a light transmitting glass component or a light transmitting plastic component.

The light transmitting component 112 is a glass part or a light transmitting plastic component. It may be understood that the light transmitting component 112 is a light transmitting glass component; or, the light transmitting component 112 is a light transmitting plastic component.

The light transmitting component 112 is a light transmitting glass component. It may be understood that the light transmitting component 112 may be made of glass with good transmittance. The glass is low in cost, which is beneficial to reduce the use cost of the electrode plate supporting device 100. Specifically, the glass may be optical glass or the like.

The light transmitting component 112 is a light transmitting plastic component. It may be understood that the light transmitting component 112 may be made of plastics with good transmittance. The plastics are low in cost, which is beneficial to reduce the use cost of the electrode plate supporting device 100. In addition, the plastics are not prone to breakage, which is beneficial to prolong the service life of the electrode plate supporting device 100. Specifically, the plastics may be acrylic or the like.

In a specific embodiment, with reference to FIG. 1 to FIG. 3, the body 110 includes the light transmitting component 112 and the light absorbing component 111. The light transmitting component 112 and the light absorbing component 111 are both hollow cylindrical, and the light transmitting component 112 sleeves the light absorbing component 111. With reference to FIG. 4 together, the supporting shaft 131 and six supporting plates 132 are disposed to pass through the hole 1111 of the light absorbing component 111. The supporting plates 132 extend along the axis of the supporting shaft 131. The supporting plates 132, the two opposite sides of each of which are connected to the supporting shaft 131 and the wall of the hole 1111, respectively, are disposed at uniform intervals in a circumferential direction (referring to the forward direction or the negative direction of arrow D) of the light absorbing component 111 so that the light absorbing component 111 can be supported stably and reliably. Moreover, the wall of the hole 1111, the outer peripheral wall of the supporting shaft 131, and surfaces, opposite to each other, of two adjacent supporting plates 132 together define a flowing passage extending along the axis of the supporting shaft 131 to realize cooling of the light absorbing component 111. The supporting shaft 131, the light transmitting component 112 and the light absorbing component 111 are disposed coaxially. Thus, the supporting shaft 131 is rotatably mounted within a laser cutting apparatus so that the rotation of the light transmitting component 112 and the light absorbing component 111 can be achieved. Furthermore, during the rotation of the light transmitting component 112, the outer circumferential surface of the light transmitting component 112 may not move radially and the electrode plate 300 may not shake, which are beneficial to improve the cutting quality.

In this specific embodiment, with reference to FIG. 1 to FIG. 3, the air extraction unit 120 is mounted at one end of the light transmitting component 112, and the air extraction opening of the air extraction unit 120 is communicated with each flowing space 1112. When the air extraction unit 120 is started, external air is capable of flowing through the flowing space 1112, thereby taking away heat accumulated on the light absorbing component 111 and realizing cooling of the light absorbing component 111.

In this specific embodiment, with reference to FIG. 1 to FIG. 3, the dust suction component 141 of the dust suction unit 140 is disposed on a side, far away from the laser assembly 200, of the light transmitting component 112. The first opening 1402 of the dust suction component 141 is disposed opposite to the outer peripheral wall of the light transmitting component 112. The first opening 1402 and the second opening 1403 are arranged in the circumferential direction of the light transmitting component 112. A brush 150 is disposed at the second opening 1403. The bristles of the brush 150 are orderly arranged along the axis of the light transmitting component 112. Thus, the brush 150 is capable of sweeping most dust off the outer peripheral wall of the light transmitting component 112. The dust swept off may enter the negative pressure dust suction chamber 1401 under the action of the negative pressure of the negative pressure dust suction chamber 1401, reducing the pollution of the dust to the electrode plate 300. The dust suction component 141 includes a main body portion 1411 and a connecting pipe portion 1412. A dust suction chamber is constructed within the main body portion 1411. The connecting pipe portion 1412 is connected to a side, far away from the light transmitting component 112, of the main body portion 1411. A first opening 1402 is formed in a surface, facing the light transmitting component 112, of the main body portion 1411, and a second opening 1403 is formed in an upper surface of the main body portion 1411. Thus, when the light transmitting component 112 rotates anticlockwise, one part of the dust swept off the outer peripheral wall of the light transmitting component 112 by the brush 150 is suctioned into the negative pressure dust suction chamber 1401 from the second opening 1403, and the dust falling off the outer peripheral wall of the light transmitting component 112 may be suctioned into the negative pressure dust suction chamber 1401 from the first opening 1402, allowing for better effect of dust removal from the outer peripheral wall of the light transmitting component 112. In addition, an inner hole of the connecting pipe portion 1412 is communicated with the negative pressure dust suction chamber 1401. The connecting pipe portion 1412 can be communicated with the suction fan of the dust suction unit 140 conveniently so that the dust suction unit 140 can be assembled more simply.

The specific operating principle of the electrode plate supporting device 100 of this specific embodiment is as follows:

Firstly, the electrode plate 300 is wound around two conveying rollers, and the electrode plate 300 is tensioned by the light transmitting component 112 and abuts against the outer peripheral wall of the light transmitting component 112. Under the action of tension, a wavy edge resulting from cold pressing is fully extended on the light transmitting component 112, and the electrode plate 300 does not shake during the rolling of the light transmitting component 112.

Secondly, the center of the laser assembly 200 and the center of the light transmitting component 112 are adjusted to be in a same horizontal line, and then the focal point of laser 210 is adjusted to be located on the abutting region of the electrode plate 300 that abuts against the outer peripheral wall of the light transmitting component 112.

Finally, cutting parameters of the laser assembly 200 are adjusted, guaranteeing that the laser 210 emitted by the laser assembly 200 is capable of completely cutting the corresponding tab portion of the electrode plate 300 and reducing the risk of failing to cut, wherein most energy of the laser 210 is used for cutting the electrode plate, and little surplus energy is completely absorbed by the light absorbing component 111 through the light transmitting component 112 after penetrating through the electrode plate. It needs to be noted that the light absorbing component 111 will be warmed after absorbing the laser 210, and the air extraction unit 120 extracts air from the flowing spaces 1112, causing external air to flow through the flowing spaces 1112 to take heat away and thereby preventing warming of the light absorbing component 111.

During cutting by the laser 210, it is inevitable that dust adheres to the outer peripheral wall of the light transmitting component 112. The dust can be effectively removed by using the brush 150 and the dust suction unit 140 to guarantee the cutting quality and efficiency of the laser 210.

A laser cutting apparatus is provided, including the electrode plate supporting device 100 described above.

The laser cutting apparatus uses the electrode plate supporting device 100 described above and exhibits high quality of cutting by laser 210, which is beneficial to reduce the reject ratio of electrode plate cutting, increase the yield of the electrode plate, reduce the fabrication cost and improve the use reliability of a battery. Because of using all the technical solutions of all the embodiments described above, the laser cutting apparatus of the embodiment of the present disclosure also have all the beneficial effects produced by the technical solutions of the embodiments described above, which will not be redundantly described one by one.

The provided laser cutting apparatus further includes conveying rollers and a laser assembly 200. The conveying rollers are disposed on both sides of the electrode plate supporting device 100. The laser assembly 200 is disposed beside the electrode plate supporting device 100 and configured to emit laser 210 to the abutting surface 1121.

The conveying rollers refer to roller-like components for conveying the electrode plate 300. In specific use, the electrode plate 300 is wound around the conveying rollers. The conveying rollers are driven by a rotation driving component to rotate, driving the electrode plate 300 to move forwards. The rotation driving component is a component such as a motor.

The laser assembly 200 refers to a component capable of emitting laser 210.

When the laser cutting apparatus operates, the body 110 is mounted between the two conveying rollers in the laser cutting apparatus. After the electrode plate 300 is wound around the two conveying rollers, the electrode plate 300 is located between the laser assembly 200 and the body 110, and the electrode plate 300 fits the abutting surface 1121 of the body 110 and is tensioned between the two conveying rollers. Subsequently, the laser cutting apparatus is adjusted such that the focal point of the laser 210 emitted by the laser assembly 200 just falls on the abutting region of the electrode plate 300 that abuts against the abutting surface 1121, thereby completing the cutting of the tab. In this process, the electrode plate 300 abuts against the abutting surface 1121, and the electrode plate 300 closely fits the abutting surface 1121 and is in the tensioned state such that the wavy edge of the electrode plate 300 is extended fully, and therefore, the problem of defocusing caused by the wavy edge is solved. Moreover, supported by the abutting surface 1121, the electrode plate 300 is tensioned and not prone to shaking, and therefore, problems such as failing to cut off the incoming material due to easy shaking of the electrode plate 300 are effectively solved. The cutting quality of the tab can be improved and the use safety of a battery can be improved.

A laser cutting method for an electrode plate is provided, wherein the laser cutting apparatus described above is used, and the laser cutting method for an electrode plate includes the following steps:
placing an electrode plate against the abutting surface of the electrode plate supporting device, and allowing the laser assembly of the laser cutting apparatus to emit laser toward the abutting surface to cut the electrode plate.

Thus, the electrode plate abuts against the abutting surface of the electrode plate supporting device, and the laser assembly emits laser toward the abutting surface. The laser emitted irradiates on the electrode plate to achieve the laser cutting of the electrode plate. In this process, the electrode plate abuts against the abutting surface and closely fits the abutting surface to extend fully, and therefore, the problem of defocusing caused by the wavy edge is solved. Moreover, supported by the abutting surface, the electrode plate is not prone to shaking, and therefore, the problem of easy shaking of the electrode plate is effectively solved. The problems such as failing to cut off the incoming material are solved. The cutting quality of a tab can be improved and the use safety of a battery can be improved.

## Claims

1. An electrode plate supporting device (100) for use in coordination with a laser assembly (200), the electrode plate supporting device (100) comprising:
a body (110) constructed with an abutting surface (1121) for abutting against an electrode plate (300) to tension the electrode plate (300), wherein the laser assembly (200) is configured to emit laser (210) to the abutting surface (1121),
**characterized in that** the body (110) comprises a light absorbing component (111) for absorbing the laser (210) and a light transmitting component (112) for allowing the laser (210) to transmit therethrough, and the light transmitting component (112) covers and is connected to the light absorbing component (111);
wherein a surface, far away from the light absorbing component (111), of the light transmitting component (112) is constructed with the abutting surface (1121).

2. The electrode plate supporting device (100) according to claim 1, wherein the light absorbing component (111) is cylindrical, and the light transmitting component (112) covers an outer peripheral wall of the light absorbing component (111).

3. The electrode plate supporting device (100) according to claim 1 or 2, wherein a hole (1111) is formed within the light absorbing component (111) and extends through the light absorbing component (111) along an axis of the light absorbing component (111).

4. The electrode plate supporting device (100) according to claim 3, further comprising an air extraction unit (120) having an air extraction opening communicated with one end of the hole (1111), or further comprising an air blowing unit having an air blowing opening communicated with one end of the hole (1111);
and/or
further comprising an air blowing unit and an air extraction unit (120), wherein one of two opposite ends of the hole (1111) is communicated with an air extraction opening of the air extraction unit (120), and the other one is communicated with an air blowing opening of the air blowing unit.

5. The electrode plate supporting device (100) according to any one of claims 3-4, further comprising a supporting component (130) disposed to pass through the hole (1111), wherein the supporting component (130) and a wall of the hole (1111) form a flowing space (1112) for air to flow, and the flowing space (1112) extends through the supporting component (130) along an axis of the light absorbing component (111).

6. The electrode plate supporting device (100) according to claim 5, wherein a plurality of flowing spaces (1112) are formed, which are arranged at intervals in a circumferential direction of the hole (1111).

7. The electrode plate supporting device (100) according to claim 6, wherein the supporting component (130) comprises a supporting shaft (131) and a plurality of supporting plates (132); the supporting shaft (131) and the plurality of supporting plates (132) are disposed to pass through the hole (1111); the plurality of supporting plates (132) are connected to the supporting shaft (131) and arranged at intervals in a circumferential direction of the supporting shaft (131);
side portions, far away from the supporting shaft (131), of the supporting plates (132) are connected to the wall of the hole (1111); and surfaces, opposite to each other, of two adjacent supporting plates (132), an outer peripheral wall of the supporting shaft (131) and the wall of the hole (1111) together define the flowing space.

8. The electrode plate supporting device (100) according to any one of claims 1-7, wherein the light transmitting component (112) is hollow cylindrical and sleeves the light absorbing component (111); and an outer peripheral wall of the light transmitting component (112) is constructed with the abutting surface (1121).

9. The electrode plate supporting device (110) according to any one of claims 1-7, further comprising a dust suction unit (140) for suctioning dust generated by electrode plate (300) cutting.

10. The electrode plate supporting device (100) according to claim 9, wherein the dust suction unit (140) comprises a dust suction component (141) constructed with a negative pressure dust suction chamber (1401) and a first opening (1402); the negative pressure dust suction chamber (1401) is communicated with the first opening (1402); and the outer peripheral wall of the light transmitting component (112) is disposed opposite to the first opening (1402).

11. The electrode plate supporting device (100) according to claim 10, wherein the first opening (1402) has a length greater than or equal to a length of the light transmitting component (112) in an axial direction of the light transmitting component (112);
and/or
wherein the dust suction unit (140) further comprising a brush (150) for sweeping dust off the outer peripheral wall of the light transmitting component (112).

12. The electrode plate supporting device (100) according to claim 11, wherein the brush (150) is disposed within the negative pressure dust suction chamber (1401);
or, the dust suction component (141) is constructed with a second opening (1403) communicated with the negative pressure dust suction chamber (1401); the first opening (1402) and the second opening (1403) are arranged in a circumferential direction of the light transmitting component (112); and the brush (150) is disposed within the second opening (1403).

13. The electrode plate supporting device (100) according to any one of claims 1-7, wherein the light absorbing component (111) is a black plastic component;
or
wherein a light transmittance of the light transmitting component (112) is greater than 95%; or
wherein the light transmitting component (112) is a light transmitting glass component or a light transmitting plastic component.

14. A laser cutting apparatus, comprising the electrode plate supporting device (100) according to any one of claims 1-13; and,
wherein the laser cutting apparatus further comprising conveying rollers disposed on two sides of the electrode plate supporting device (100), and a laser assembly (200) disposed beside the electrode plate supporting device (100) and configured to emit laser (210) to the abutting surface (1121).

15. A laser cutting method for an electrode plate (300), **characterized in that** the laser cutting apparatus according to claim 14 is used, the laser cutting method for an electrode plate (300) comprising the following steps:
placing an electrode plate (300) against the abutting surface (1121) of the electrode plate supporting device (100), and allowing the laser assembly (200) of the laser cutting apparatus to emit laser (100) toward the abutting surface (1121) to cut the electrode plate (300).

## Patentansprüche

1. Elektrodenplattenstützvorrichtung (100) zur Verwendung in Koordination mit einer Laserbaugruppe (200), wobei die Elektrodenplattenstützvorrichtung (100) Folgendes umfasst:
einen Körper (110), der mit einer Anlagefläche (1121) zum Anlegen an eine Elektrodenplatte (300) ausgestaltet ist, um die Elektrodenplatte (300) zu spannen, wobei die Laserbaugruppe (200) dazu ausgelegt ist, einen Laser (210) zu der Anlagefläche (1121) zu emittieren, **dadurch gekennzeichnet, dass**
der Körper (110) eine lichtabsorbierende Komponente (111) zum Absorbieren des Lasers (210) und eine lichtdurchlässige Komponente (112) zum Ermöglichen eines Durchlassens des Laser (210) dort hindurch umfasst, und wobei die lichtdurchlässige Komponente (112) die lichtabsorbierende Komponente (111) bedeckt und damit verbunden ist;
wobei eine von der lichtabsorbierenden Komponente (111) entfernte Oberfläche der lichtdurchlässigen Komponente (112) mit der Anlagefläche (1121) ausgestaltet ist.

2. Elektrodenplattenstützvorrichtung (100) nach Anspruch 1, wobei die lichtabsorbierende Komponente (111) zylindrisch ist und die lichtdurchlässige Komponente (112) eine Außenumfangswand der lichtabsorbierenden Komponente (111) bedeckt.

3. Elektrodenplattenstützvorrichtung (100) nach Anspruch 1 oder 2, wobei ein Loch (1111) innerhalb der lichtabsorbierenden Komponente (111) gebildet ist und sich entlang einer Achse der lichtabsorbierenden Komponente (111) durch die lichtabsorbierende Komponente (111) erstreckt.

4. Elektrodenplattenstützvorrichtung (100) nach Anspruch 3, ferner umfassend eine Entlüftungseinheit (120) mit einer Entlüftungsöffnung, die mit einem Ende des Lochs (1111) in Verbindung steht, oder ferner umfassend eine Luftblaseinheit mit einer Luftblasöffnung, die mit einem Ende des Lochs (1111) in Verbindung steht;
und/oder
ferner umfassend eine Luftblaseinheit und eine Entlüftungseinheit (120), wobei eines von zwei gegenüberliegenden Enden des Lochs (1111) mit einer Entlüftungsöffnung der Entlüftungseinheit (120) in Verbindung steht und das andere mit einer Luftblasöffnung der Luftblaseinheit in Verbindung steht.

5. Elektrodenplattenstützvorrichtung (100) nach einem der Ansprüche 3-4, ferner umfassend eine Stützkomponente (130), die so angeordnet ist, dass sie durch das Loch (1111) verläuft, wobei die Stützkomponente (130) und eine Wand des Lochs (1111) einen Strömungsraum (1112) zum Strömen von Luft bilden und sich der Strömungsraum (1112) entlang einer Achse der lichtabsorbierenden Komponente (111) durch die Stützkomponente (130) erstreckt.

6. Elektrodenplattenstützvorrichtung (100) nach Anspruch 5, wobei mehrere Strömungsräume (1112) gebildet sind, die in einer Umfangsrichtung des Lochs (1111) in Intervallen angeordnet sind.

7. Elektrodenplattenstützvorrichtung (100) nach Anspruch 6, wobei die Stützkomponente (130) eine Stützwelle (131) und mehrere Stützplatten (132) umfasst; wobei die Stützwelle (131) und die mehreren Stützplatten (132) so angeordnet sind, dass sie durch das Loch (1111) verlaufen; wobei die mehreren Stützplatten (132) mit der Stützwelle (131) verbunden und in einer Umfangsrichtung der Stützwelle (131) in Intervallen angeordnet sind;
wobei von der Stützwelle (131) entfernte Seitenabschnitte der Stützplatten (132) mit der Wand des Lochs (1111) verbunden sind; und wobei einander gegenüberliegende Flächen von zwei benachbarten Stützplatten (132), eine Außenumfangswand der Stützwelle (131) und die Wand des Lochs (1111) gemeinsam den Strömungsraum definieren.

8. Elektrodenplattenstützvorrichtung (100) nach einem der Ansprüche 1-7, wobei die lichtdurchlässige Komponente (112) hohlzylindrisch ist und die lichtabsorbierende Komponente (111) umhüllt; und wobei eine Außenumfangswand der lichtdurchlässigen Komponente (112) mit der Anlagefläche (1121) ausgestaltet ist.

9. Elektrodenplattenstützvorrichtung (110) nach einem der Ansprüche 1-7, ferner umfassend eine Staubabsaugeinheit (140) zum Absaugen von Staub, der durch ein Schneiden der Elektrodenplatte (300) erzeugt wird.

10. Elektrodenplattenstützvorrichtung (100) nach Anspruch 9, wobei die Staubabsaugeinheit (140) eine Staubabsaugkomponente (141) umfasst, die mit einer Unterdruckstaubabsaugkammer (1401) und einer ersten Öffnung (1402) ausgestaltet ist; wobei die Unterdruckstaubabsaugkammer (1401) mit der ersten Öffnung (1402) in Verbindung steht; und wobei die Außenumfangswand der lichtdurchlässigen Komponente (112) gegenüber der ersten Öffnung (1402) angeordnet ist.

11. Elektrodenplattenstützvorrichtung (100) nach Anspruch 10, wobei die erste Öffnung (1402) eine Länge aufweist, die in einer axialen Richtung der lichtdurchlässigen Komponente (112) größer als oder gleich einer Länge der lichtdurchlässigen Komponente (112) ist;
und/oder
wobei die Staubabsaugeinheit (140) ferner eine Bürste (150) zum Abwischen von Staub von der Außenumfangswand der lichtdurchlässigen Komponente (112) umfasst.

12. Elektrodenplattenstützvorrichtung (100) nach Anspruch 11, wobei die Bürste (150) in der Unterdruckstaubabsaugkammer (1401) angeordnet ist;
oder wobei die Staubabsaugkomponente (141) mit einer zweiten Öffnung (1403) ausgestaltet ist, die mit der Unterdruckstaubabsaugkammer (1401) in Verbindung steht; wobei die erste Öffnung (1402) und die zweite Öffnung (1403) in einer Umfangsrichtung der lichtdurchlässigen Komponente (112) angeordnet sind; und wobei die Bürste (150) in der zweiten Öffnung (1403) angeordnet ist.

13. Elektrodenplattenstützvorrichtung (100) nach einem der Ansprüche 1-7, wobei die lichtabsorbierende Komponente (111) eine schwarze Kunststoffkomponente ist;
oder
wobei eine Lichtdurchlässigkeit der lichtdurchlässigen Komponente (112) größer als 95 % ist; oder
wobei die lichtdurchlässige Komponente (112) eine lichtdurchlässige Glaskomponente oder eine lichtdurchlässige Kunststoffkomponente ist.

14. Laserschneideinrichtung, die die Elektrodenplattenstützvorrichtung (100) nach einem der Ansprüche 1-13 umfasst; und
wobei die Laserschneideinrichtung ferner Förderrollen umfasst, die auf zwei Seiten der Elektrodenplattenstützvorrichtung (100) angeordnet sind, und wobei eine Laserbaugruppe (200) neben der Elektrodenplattenstützvorrichtung (100) angeordnet und dazu ausgelegt ist, einen Laser (210) zu der Anlagefläche (1121) zu emittieren.

15. Laserschneidverfahren für eine Elektrodenplatte (300), **dadurch gekennzeichnet, dass** die Laserschneideinrichtung nach Anspruch 14 verwendet wird, wobei das Laserschneidverfahren für eine Elektrodenplatte (300) die folgenden Schritte umfasst:
Platzieren einer Elektrodenplatte (300) an der Anlagefläche (1121) der Elektrodenplattenstützvorrichtung (100), und Ermöglichen, dass die Laserbaugruppe (200) der Laserschneideinrichtung einen Laser (100) in Richtung der Anlagefläche (1121) emittiert, um die Elektrodenplatte (300) zu schneiden.

## Revendications

1. Dispositif de support de plaque d'électrode (100) destiné à être utilisé en coordination avec un ensemble laser (200), le dispositif de support de plaque d'électrode (100) comprenant :
un corps (110) construit avec une surface d'appui (1121) destinée à venir en appui contre une plaque d'électrode (300) pour tendre la plaque d'électrode (300), l'ensemble laser (200) étant configuré pour émettre un rayonnement laser (210) vers la surface d'appui (1121),
**caractérisé en ce que**
le corps (110) comprend un composant absorbant la lumière (111) destiné à absorber le rayonnement laser (210) et un composant transmettant la lumière (112) destiné à permettre au rayonnement laser (210) de passer à travers lui, et le composant transmettant la lumière (112) recouvre le composant absorbant la lumière (111) et est relié lui ;
une surface du composant transmettant la lumière (112) éloignée du composant absorbant la lumière (111) étant construite avec la surface d'appui (1121).

2. Dispositif de support de plaque d'électrode (100) selon la revendication 1, dans lequel le composant absorbant la lumière (111) est cylindrique, et le composant transmettant la lumière (112) recouvre une paroi périphérique extérieure du composant absorbant la lumière (111).

3. Dispositif de support de plaque d'électrode (100) selon la revendication 1 ou 2, dans lequel un trou (1111) est formé à l'intérieur du composant absorbant la lumière (111) et s'étend à travers le composant absorbant la lumière (111) le long d'un axe du composant absorbant la lumière (111).

4. Dispositif de support de plaque d'électrode (100) selon la revendication 3, comprenant en outre une unité d'extraction d'air (120) ayant une ouverture d'extraction d'air communiquant avec une extrémité du trou (1111), ou comprenant en outre une unité de soufflage d'air ayant une ouverture de soufflage d'air communiquant avec une extrémité du trou (1111) ;
et/ou
comprenant en outre une unité de soufflage d'air et une unité d'extraction d'air (120), l'une des deux extrémités opposées du trou (1111) communiquant avec une ouverture d'extraction d'air de l'unité d'extraction d'air (120), et l'autre communiquant avec une ouverture de soufflage d'air de l'unité de soufflage d'air.

5. Dispositif de support de plaque d'électrode (100) selon l'une quelconque des revendications 3 et 4, comprenant en outre un composant de support (130) disposé de sorte qu'il passe à travers le trou (1111), dans lequel le composant de support (130) et une paroi du trou (1111) forment un espace d'écoulement (1112) pour l'écoulement de l'air, et l'espace d'écoulement (1112) s'étend à travers le composant de support (130) le long d'un axe du composant absorbant la lumière (111).

6. Dispositif de support de plaque d'électrode (100) selon la revendication 5, dans lequel une pluralité d'espaces d'écoulement (1112) sont formés, ceux-ci étant agencés à des intervalles dans une direction circonférentielle du trou (1111).

7. Dispositif de support de plaque d'électrode (100) selon la revendication 6, dans lequel le composant de support (130) comprend un arbre de support (131) et une pluralité de plaques de support (132) ; l'arbre de support (131) et la pluralité de plaques de support (132) sont disposés de sorte qu'ils passent à travers le trou (1111) ; la pluralité de plaques de support (132) sont raccordées à l'arbre de support (131) et agencées à des intervalles dans une direction circonférentielle de l'arbre de support (131) ;
des parties latérales des plaques de support (132) éloignées de l'arbre de support (131) sont reliées à la paroi du trou (1111) ; et des surfaces, situées en face l'une de l'autre, de deux plaques de support (132) adjacentes, une paroi périphérique extérieure de l'arbre de support (131) et la paroi du trou (1111) définissent ensemble l'espace d'écoulement.

8. Dispositif de support de plaque d'électrode (100) selon l'une quelconque des revendications 1 à 7, dans lequel le composant transmettant la lumière (112) est cylindrique et creux et enveloppe le composant absorbant la lumière (111) ; et une paroi périphérique extérieure du composant transmettant la lumière (112) est construite avec la surface d'appui (1121).

9. Dispositif de support de plaque d'électrode (110) selon l'une quelconque des revendications 1 à 7, comprenant en outre une unité d'aspiration de poussière (140) pour aspirer la poussière générée par la découpe de la plaque d'électrode (300).

10. Dispositif de support de plaque d'électrode (100) selon la revendication 9, dans lequel l'unité d'aspiration de poussière (140) comprend un composant d'aspiration de poussière (141) construit avec une chambre d'aspiration de poussière à pression négative (1401) et une première ouverture (1402) ; la chambre d'aspiration de poussière à pression négative (1401) communique avec la première ouverture (1402) ; et la paroi périphérique extérieure du composant transmettant la lumière (112) est disposée en face de la première ouverture (1402).

11. Dispositif de support de plaque d'électrode (100) selon la revendication 10, dans lequel la première ouverture (1402) a une longueur supérieure ou égale à une longueur du composant transmettant la lumière (112) dans une direction axiale du composant transmettant la lumière (112) ;
et/ou
dans lequel l'unité d'aspiration de poussière (140) comprend en outre une brosse (150) pour balayer la poussière de la paroi périphérique extérieure du composant transmettant la lumière (112).

12. Dispositif de support de plaque d'électrode (100) selon la revendication 11, dans lequel la brosse (150) est disposée à l'intérieur de la chambre d'aspiration de poussière à pression négative (1401) ;
ou le composant d'aspiration de poussière (141) est construit avec une seconde ouverture (1403) communiquant avec la chambre d'aspiration de poussière à pression négative (1401) ; la première ouverture (1402) et la seconde ouverture (1403) sont disposées dans une direction circonférentielle du composant transmettant la lumière (112) ; et la brosse (150) est disposée dans la seconde ouverture (1403).

13. Dispositif de support de plaque d'électrode (100) selon l'une quelconque des revendications 1 à 7, dans lequel le composant absorbant la lumière (111) est un composant en plastique noir ;
ou
dans lequel un facteur de transmission de lumière du composant transmettant la lumière (112) est supérieur à 95 % ;
ou
dans lequel le composant transmettant la lumière (112) est un composant en verre transmettant la lumière ou un composant en plastique transmettant la lumière.

14. Appareil de découpe au laser, comprenant le dispositif de support de plaque d'électrode (100) selon l'une quelconque des revendications 1 à 13 ; et
l'appareil de découpe au laser comprenant en outre des rouleaux de transport disposés sur deux côtés du dispositif de support de plaque d'électrode (100), et un ensemble laser (200) disposé à côté du dispositif de support de plaque d'électrode (100) et configuré pour émettre un rayonnement laser (210) vers la surface d'appui (1121).

15. Procédé de découpe au laser pour une plaque d'électrode (300), **caractérisé en ce que** l'appareil de découpe au laser selon la revendication 14 est utilisé, le procédé de découpe au laser pour une plaque d'électrode (300) comprenant les étapes suivantes :
placer une plaque d'électrode (300) contre la surface d'appui (1121) du dispositif de support de plaque d'électrode (100), et permettre à l'ensemble laser (200) de l'appareil de découpe au laser d'émettre un rayonnement laser (100) vers la surface d'appui (1121) pour découper la plaque d'électrode (300).
